# EUROPÄISCHE PATENTANMELDUNG

(11) **EP 2 860 231 A1**
(43) Veröffentlichungstag der Anmeldung: **15.04.2015**
(21) Anmeldenummer: 13187760.7
(22) Anmeldetag: 08.10.2013
(51) Int. Cl.: C09J 5/06, B23K 1/00, B23K 35/36

(54) **Verfahren zur Herstellung einer dünnen Lotschicht**

(71) Anmelder: Siemens Aktiengesellschaft, 80333 München (DE)
(72) Erfinder: Laux, Britta, 14059 Berlin (DE)

(57) **Zusammenfassung**

Durch einen Beschichtungsprozess, bei dem Klebstoff und Pulverpartikel aufgebracht werden, können Bauteile einfach beschichtet werden.

## Beschreibung

Die Erfindung betrifft ein einfaches Verfahren zur Herstellung einer dünnen Lotschicht.

Lotmaterialien können verwendet werden, um auf Bauteilen, die nicht ein gefordertes Mindestmaß an einer Dicke oder einer bestimmten Struktur aufweisen, Material aufzubauen.
Ebenso gibt es Bauteile mit Stellen, die insbesondere im eingebauten Zustand schwer zugänglich sind, die ebenfalls zusätzlich beschichtet werden müssen.

Es ist daher Aufgabe der Erfindung ein Beschichtungsverfahren aufzuzeigen, mit dem einfach und auch an schwer zugänglichen Stellen eine Lotschicht erzeugt werden kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Die Erfindung ermöglicht es, Lotschichten einfach zu erzeugen.

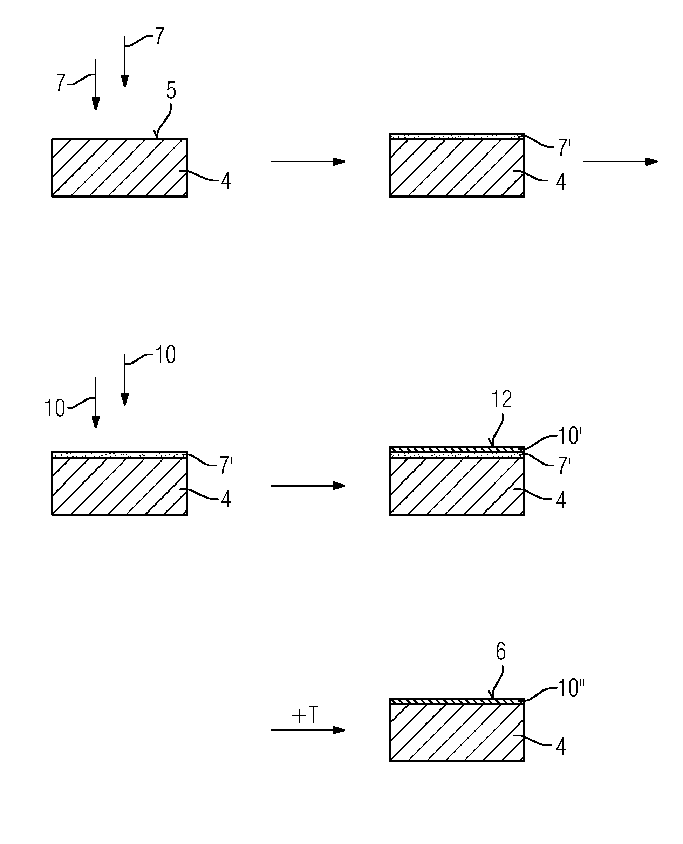

Die Figur zeigt den Ablauf eines erfindungsgemäßen Verfahrens.

Die Figur und die Beschreibung stellen nur Ausführungsbeispiele der Erfindung dar.

In der Figur ist ein Substrat 4 eines Bauteils dargestellt, das an seiner Oberfläche 5 beschichtet werden soll, insbesondere nur lokal beschichtet werden soll.
Die Notwendigkeit einer Beschichtung im Bereich der Oberfläche 5 kann aufgrund verschiedener Gründe wie Schutz vor Erosion, geforderte Mindestwanddicke usw. gegeben sein. Dabei kann die Oberfläche 5 auch die Oberfläche einer Schicht darstellen. Diese Schicht auf dem Substrat 4 ist metallisch, insbesondere eine MCrAlY- oder Aluminidschicht. Ebenso kann diese Schicht keramisch sein.

Das Substrat 4 stellt vorzugsweise eine nickel- oder kobaltbasierte Superlegierung dar.

In einem ersten Schritt wird ein Kleber 7 auf die Oberfläche 5 aufgebracht, insbesondere aufgesprüht oder aufgepinselt, so dass ein Substrat 4 mit einer Klebeschicht 7' erzeugt wird. In einem weiteren Schritt wird ein Lotmaterial 10 in Pulverform aufgesprüht, darüber aufgebracht, insbesondere rieseln gelassen, in ein Pulverbett eingetunkt oder in sonstiger Art und Weise in Kontakt mit der Klebschicht 7' gebracht. Dadurch entsteht eine Pulverschicht 10' auf der Klebschicht 7'. Mittels einer Wärmebehandlung (+T) werden die Klebschicht 7' und die Pulverschicht 10' in eine Lotschicht 10" auf dem Substrat 4 umgewandelt.

Das Lotmaterial 10 ist vorzugsweise nickel- oder kobaltbasiert und weist einen deutlich niedrigeren Schmelzpunkt, insbesondere mindestens um 10K, ganz insbesondere um 20K, niedrigere Schmelztemperatur auf als das Material des Substrats 4 oder der Schichten.

Die Wärmebehandlung (+T) des Substrats 4 kann in einem Ofen erfolgen, oder wenn es sich bei dem Bauteil um eine Turbinenschaufel handelt, kann dies auch während des Betriebs einer Maschine, einer Gasturbine erfolgen, bei dem beim ersten Erwärmen der Kleber der Klebschicht 7' verdampft, das Lotpulver 10 aufschmilzt und bei noch höheren Temperaturen zum Aufschmelzen und Kontaktierung mit dem Substrat 4 führt.

Ebenso kann mit einer manuellen Laserpistole oder einem manuell handhabbaren Schweißbrenner die Pulverschicht 10' aufgeschmolzen und der Kleber der Klebeschicht 7' entfernt werden, so dass die gewünschte Lotschicht 10" entsteht.

Da sich auf der Klebeschicht 7' nur eine Pulverschicht 10' bilden wird, ist die erzeugte Lotschicht 10" auf dem Substrat 4 relativ dünn.

Ggf. kann die Prozedur gemäß der Figur mit der Lotschicht 10' auf einer Oberfläche 12 der Lotschicht 10' vor der Wärmebehandlung wiederholt werden.

Ebenso können die ersten vier Schritte gemäß der Figur auch mit der Oberfläche 6 der wärmebehandelten Lotschicht 10" wiederholt werden.

Ebenso kann der zweistufige Prozess von Aufbringung einer Klebeschicht und Aufbringung einer Pulverschicht durch einen einstufigen Prozess ersetzt werden, bei dem direkt eine Mischung aus Kleber und/oder Binder und einem Pulver zum Aufsprühen verwendet wird.
Die weitere Vorgehensweise bezüglich der Entbinderung und thermischen Behandlung ist entsprechend gemäß dem Ablauf der Figur zu handhaben.

Die Erzeugung der Lotschicht 10" erfolgt insbesondere nur lokal auf einer Oberfläche eines Bauteils.

## Patentansprüche

1. Verfahren
zur Herstellung einer Lotschicht (10") auf einem Substrat (4),
bei dem zumindest
auf eine Oberfläche (5) des Substrats (4) eines Bauteils zuerst ein Kleber (7) aufgebracht
und so eine Klebschicht (7') auf dem Substrat (4) erzeugt wird und
in einem weiteren Schritt Lotmaterial (10) in Kontakt mit der Klebschicht (7') gebracht wird,
so dass sich auf der Klebschicht (7') eine Pulverschicht (10') bildet,
wobei dann zumindest eine,
insbesondere nur eine,
Wärmebehandlung zum Verdampfen oder Entfernen der Klebschicht (7') und zum Aufschmelzen der Pulverschicht (10') durchgeführt wird und
sich so zumindest eine auf dem Substrat (4) haftende Lotschicht (10") bildet.

2. Verfahren nach Anspruch 1,
bei dem die Verfahrensschritte gemäß Anspruch 1 für eine Oberfläche (12) der Pulverschicht (10') zumindest einmal vor der Wärmebehandlung wiederholt werden.

3. Verfahren nach Anspruch 2,
bei dem die Verfahrensschritte gemäß Anspruch 1 für eine Oberfläche (12) der Pulverschicht (10') vor der Wärmebehandlung nur einmal wiederholt werden.

4. Verfahren nach Anspruch 1,
bei dem die Verfahrensschritte gemäß Anspruch 1 für eine Oberfläche (6) der Lotschicht (10") wiederholt werden.

5. Verfahren nach einem oder beiden der Ansprüche 1, 2, 3 oder 4,
bei dem das Substrat (4) metallisch ist,
insbesondere nickel- oder kobaltbasiert ist.

6. Verfahren nach einem oder mehreren der Ansprüche 1, 2, 3, 4 oder 5,
bei dem das Lotmaterial (10) einen um mindestens 10K, insbesondere um mindestens 20K,
niedrigeren Schmelzpunkt als das Material des Substrats (4) aufweist und metallisch ist.

7. Verfahren nach einem oder mehreren der Ansprüche 1 bis 6,
bei dem die Wärmebehandlung in einem Ofen erfolgt.

8. Verfahren nach einem oder mehreren der Ansprüche 1 bis 6,
bei dem die Wärmezufuhr für die Wärmebehandlung durch manuell handhabbare Energiequellen,
insbesondere Laser oder Schweißbrenner,
erzeugt wird.

9. Verfahren nach einem oder mehreren der vorhergehenden Ansprüche,
bei dem die Beschichtung, die Entbinderung und das Aufschmelzen der Pulverschicht (10') im eingebauten Zustand eines Bauteils in einer Maschine erfolgt.

10. Verfahren nach einem oder mehreren der folgenden Unteransprüche,
bei dem das Bauteil eine Turbinenschaufel darstellt.

11. Verfahren nach einem oder mehreren der vorhergehenden Ansprüche,
bei dem auf die Oberfläche (5) des Substrats (4) eine Mischung aus Kleber (7) und Lotmaterial (10) aufgesprüht wird.

12. Verfahren nach einem oder mehreren der vorhergehenden Ansprüche,
bei dem die Lotschicht (10") nur lokal auf dem Substrat (4) eines Bauteils aufgebracht wird.

13. Verfahren nach einem oder mehreren der vorhergehenden Ansprüche,
bei dem die Lotschicht (10") auf einer Schicht eines Substrats (4) erzeugt wird.

14. Verfahren nach Anspruch 13,
bei dem die Schicht eine metallische Schicht oder eine keramische Schicht darstellt.
